(19) Europäisches Patentamt
European Patent Office
Office européen des brevets

(11) **EP 4 776 652 A1**

(12) **EUROPEAN PATENT APPLICATION**

(43) Date of publication:
**15.07.2026  Bulletin 2026/29**

(21) Application number: **25221633.8**

(22) Date of filing: **09.12.2025**

(51) International Patent Classification (IPC):
**H04R 3/00** (2006.01)      **H04R 9/02** (2006.01)
**H04R 29/00** (2006.01)     **H04R 1/28** (2006.01)
**H04R 9/06** (2006.01)

(52) Cooperative Patent Classification (CPC):
**H04R 3/007; H04R 9/025; H04R 29/001;**
H04R 1/2834; H04R 9/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.01.2025  JP 2025003707**

(71) Applicant: **Alps Alpine Co., Ltd.**
**Ota-ku,**
**Tokyo 145-8501 (JP)**

(72) Inventor: **Asai, Yuki**
**Iwaki-city Fukushima (JP)**

(74) Representative: **Schmitt-Nilson Schraud Waibel Wohlfrom**
**Patentanwälte Partnerschaft mbB**
**Pelkovenstraße 143**
**80992 München (DE)**

(54) **DISPLACEMENT-DETECTING DEVICE FOR SPEAKER, AND AUDIO SYSTEM**

(57)    A displacement-detecting device for a speaker includes a magnet fixed to a vibration body configured to vibrate by air vibration caused by vibration of a vibration system of the speaker, a sensor provided at a fixed body relative to a fixed system of the speaker, a displacement detector, and a displacement converter. The sensor is configured to detect a magnetic flux vector of the magnet acting on the sensor. The displacement detector is configured to detect a displacement of a vibration system of a passive radiator based on a detection value of the magnetic flux vector by the sensor. The displacement converter is configured to convert the displacement of the vibration system of the passive radiator to a displacement of the vibration system of the speaker.

FIG.2

EP 4 776 652 A1

**Description**

The present disclosure relates to a technique for detecting displacement of a vibration system of a speaker.

A technique for detecting displacement of a vibration system including a diaphragm and the like of a speaker is known, in which a displacement-detecting magnet is fixed to the vibration system of the speaker, an angle of a resultant vector of a magnetic vector generated by the displacement-detecting magnet and a magnetic flux vector generated by a magnetic circuit provided in a fixed system of the speaker is detected by a magnetic angle sensor provided in the fixed system of the speaker, and displacement of the vibration system of the speaker is detected based on the angle of the detected resultant vector. See, for example, JP 2022-149259 A.

According to the above-described technique for detecting the displacement of the vibration system of the speaker with the magnetic angle sensor, a magnetic field generated by a current flowing through a voice coil of the speaker may disturb the detection of the resultant vector, and the displacement may sometimes fail to be detected correctly.

The present disclosure relates to a displacement-detecting device for a speaker, and an audio system according to the appended claims. Embodiments are disclosed in the dependent claims.

The present disclosure eliminates the effect of the magnetic field caused by the current flowing through the voice coil of the speaker from the detection of the displacement of the vibration system of the speaker using the magnetic flux generated by the magnet.

According to an aspect, a displacement-detecting device for a speaker includes a magnet fixed to a vibration body configured to vibrate by air vibration caused by vibration of a vibration system of the speaker, a sensor provided at a fixed body relative to a fixed system of the speaker, a displacement detector, and a displacement converter. The sensor is configured to detect a magnetic flux vector of the magnet acting on the sensor. The displacement detector is configured to detect a displacement of a vibration system of a passive radiator based on a detection value of the magnetic flux vector by the sensor. The displacement converter is configured to convert the displacement of the vibration system of the passive radiator to a displacement of the vibration system of the speaker in accordance with a relationship between the displacement of the vibration system of the passive radiator and the displacement of the vibration system of the speaker.

FIG. 1 is a diagram illustrating a configuration of an audio system according to an embodiment of the present disclosure;
FIG. 2 is a view illustrating a relationship between a speaker and a passive radiator according to an embodiment of the present disclosure;
FIGS. 3A and 3B are views illustrating a configuration of the speaker according to an embodiment of the present disclosure;
FIGS. 4A to 4D are views illustrating a configuration of the passive radiator according to an embodiment of the present disclosure; and
FIG. 5 is a diagram illustrating a displacement transfer model from the speaker to the passive radiator.

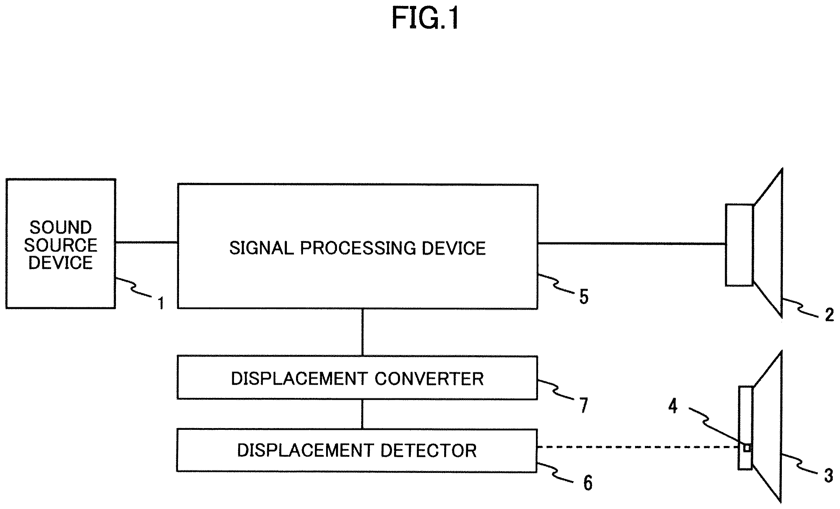

Hereinafter, embodiments of the present disclosure will be described. FIG. 1 illustrates a configuration of an audio system according to an embodiment of the present disclosure. As illustrated in FIG. 1, the audio system includes a sound source device 1, a speaker 2, a passive radiator 3, a sensor 4 provided at the passive radiator 3, a signal processing device 5 configured to perform predetermined signal processing on an audio signal output from the sound source device 1 and output the processed audio signal to the speaker 2, a displacement detector 6 configured to measure a displacement x2 of a vibration system of the passive radiator 3 based on an output of the sensor 4, and a displacement converter 7 configured to convert the displacement x2 to a displacement x1 of the vibration system of the speaker 2.

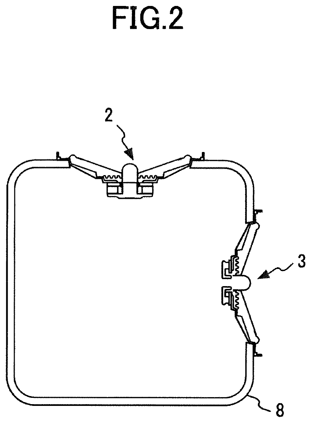

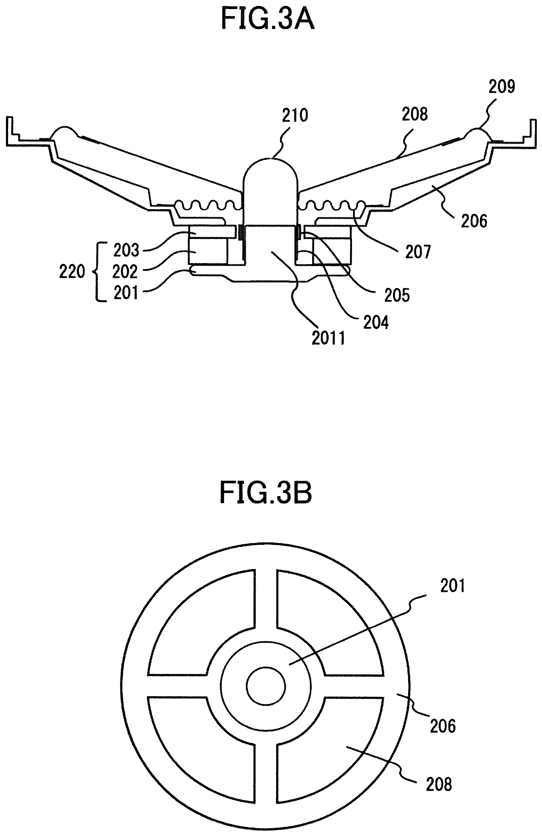

Herein, the signal processing performed by the signal processing device 5 includes, for example, correcting an audio signal in accordance with the displacement x1 so that distortion of an output of the speaker 2 is eliminated, and limiting an audio signal output to the speaker 2 in accordance with the displacement x1 so that a displacement range of the vibration system of the speaker 2 stays within a predetermined range. Next, as illustrated in FIG. 2, the speaker 2 and the passive radiator 3 are fixed to openings provided in an enclosure 8 so as to seal the enclosure 8 by closing the openings. FIG. 3A illustrates a configuration of the speaker 2. As illustrated in FIG. 3A, the speaker 2 includes a yoke 201, a magnet 202, a top plate 203, a voice coil bobbin 204, a voice coil 205, a frame 206, a damper 207, a diaphragm 208, an edge 209, and a dust cap 210. Herein, the vibration system of the speaker 2 includes the diaphragm 208 and the voice coil bobbin 204, and a fixed system of the speaker 2 includes the yoke 201, the magnet 202, the top plate 203, and the frame 206.

The upper side of FIG. 3A is defined to be forward of the speaker 2, and the lower side of FIG. 3A is defined to be rearward of the speaker 2. As illustrated in FIG. 2, an outer edge of the frame 206 is fixed to an edge of the opening of the enclosure 8 such that a front side of the speaker 2 faces outward of the enclosure 8. Next, the yoke 201 has a protrusion 2011, which extends forward, at a central portion of the yoke 201. The annular magnet 202 is provided at an outer periphery of the protrusion 2011, and the annular top plate 203 is provided on the magnet 202. A magnetic circuit 220 is formed by the yoke 201, the magnet 202, and the top plate 203.

The voice coil bobbin 204 has a hollow cylindrical shape, and the voice coil 205, to which an audio signal from the signal processing device 5 is applied, is wound around an outer periphery of the voice coil bobbin 204. The protrusion 2011 of the yoke 201 is inserted to a hollow of the voice coil bobbin 204 from a rearward direction so that the voice coil bobbin 204 can move forward and rearward relative to the yoke 201. The voice coil 205 is arranged between the protrusion 2011 of the yoke 201 and the top plate 203, at a position through which magnetic flux generated by the magnetic circuit 220 passes.

The diaphragm 208 has substantially the same shape as a lateral surface of a truncated cone having the front-rear direction of the speaker 2 as its height direction, and an outer peripheral edge of the diaphragm 208 is coupled to a front end of the frame 206 via an edge 209. An inner peripheral edge of the diaphragm 208 is fixed to a front end of the voice coil bobbin 204.

In the configuration of the speaker 2 described above, when an audio signal is applied to the voice coil 205 from the signal processing device 5, the voice coil bobbin 204 vibrates back and forth in accordance with the amplitude of the audio signal due to electromagnetic interaction between magnetic flux generated from the magnetic circuit 220 and the audio signal flowing through the voice coil 205. When the voice coil bobbin 204 vibrates, the diaphragm 208 coupled to the voice coil bobbin 204 also vibrates, thereby generating sound corresponding to the audio signal.

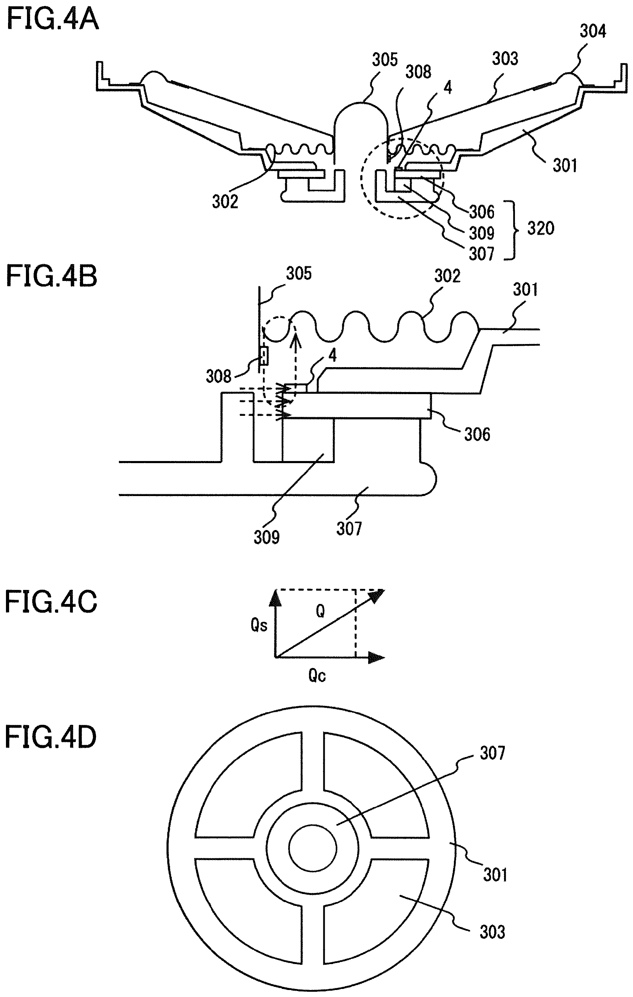

As illustrated in FIG. 3B, a rear surface of the diaphragm 208 of the speaker 2 is exposed to an inside of the enclosure 8. Next, FIG. 4A illustrates a configuration of the passive radiator 3. As illustrated in FIG. 4A, the passive radiator 3 includes a frame 301, a damper 302, a diaphragm 303, an edge 304, a central cylindrical portion 305 coupled to an inner periphery of the diaphragm 303, a top plate 306, and a base 307. Herein, a vibration system of the passive radiator 3 includes the diaphragm 303 and the central cylindrical portion 305, and a fixed system of the passive radiator 3 includes the frame 301, the top plate 306, and the base 307.

The upper side of FIG. 4A is defined to be forward of the passive radiator 3, and the lower side of FIG. 4A is defined to be rearward of the passive radiator 3. As illustrated in FIG. 2, an outer edge of the frame 301 is fixed to an edge of the opening of the enclosure 8 such that the front side of the passive radiator 2 faces outward of the enclosure 8. Herein, a front end of the central cylindrical portion 305 is closed, and a displacement-detecting magnet 308 is fixed to a rear end of the central cylindrical portion 305. The sensor 4 is fixed to the top plate 306 at a position through which magnetic flux generated by the displacement-detecting magnet 308 passes. The magnet 309 is provided between the top plate 306 and the base 307, at a position close to the sensor 4. A magnetic circuit 320 is formed by the magnet 309, the top plate 306, and the base 307 and generates magnetic flux passing through the sensor 4. Herein, at the position of the sensor 4, a direction of the magnetic flux generated by the displacement-detecting magnet 308 and a direction of the magnetic flux generated by the magnetic circuit 320 are substantially orthogonal to each other. The sensor 4 is a magnetic angle sensor, and as illustrated in FIG. 4C, detects and outputs an angle of a resultant vector Q of a magnetic flux vector Qc acting from the magnetic circuit 320 and a magnetic flux vector Qs acting from the displacement-detecting magnet 308. This angle corresponds to a displacement amount of the vibration system of the passive radiator 3 because the magnetic flux vector Qs, which is generated by the displacement-detecting magnet 308 and acts on the sensor 4, varies in accordance with displacement of the displacement-detecting magnet 308, which is displaced by displacement of the central cylindrical portion 305 following displacement of the diaphragm 303.

Herein, as illustrated in FIG. 4D, a rear surface of the diaphragm 303 of the passive radiator 3 is exposed to the inside of the enclosure 8. As described above, the rear surface of the diaphragm 208 of the speaker 2 and the rear surface of the passive radiator 3 are exposed to the inside of the enclosure 8. Therefore, air inside the enclosure 8 vibrates with the vibration of the vibration system of the speaker 2, and the vibration system of the passive radiator 3 vibrates with the vibration of the air inside the enclosure 8.

Therefore, there is a certain relationship between a displacement $x1$ of the vibration system of the speaker 2 and a displacement $x2$ of the vibration system of the passive radiator 3. Note that the passive radiator 3 is generally provided to improve the sound quality of the output sound of the speaker 2. Referring back to FIG. 1, the displacement detector 6 measures the displacement of the vibration system of the passive radiator 3 based on the output of the sensor 4, and outputs the measured displacement as a displacement $x2$ to the displacement converter 7.

The displacement converter 7 converts the displacement $x2$ of the vibration system of the passive radiator 3 to the displacement $x1$ of the vibration system of the speaker 2, and outputs the displacement $x1$ to the signal processing device 5. The displacement converter 7 converts the displacement $x2$ to the displacement $X1$, for example, as follows. That is, a value of the displacement $x1$ corresponding to a value of the displacement $x2$ is obtained in advance by actual measurement or simulation, and stored in the displacement converter 7 as corresponding information. Then, the displacement converter 7 obtains a value of the displacement $x1$ corresponding to the value of the displacement $x2$ output from the displacement detector 6 in accordance with the stored corresponding information and outputs the value of the displacement $x1$ to the signal processing device 5.

Alternatively, for the conversion of the displacement $x2$ to the displacement $x1$, the displacement converter 7 serves as a filter configured to convert the displacement $x2$ to the displacement $x1$, and the displacement $x2$ output from the displacement detector 6 is converted to the value of the displacement $x1$ through the filter and output to the signal processing device 5. In this case, a transfer function F of the filter can be expressed by Equation 1 as $x1 = F(x2)$.

$$F = \frac{X_1}{X_2}\frac{\omega_n^2}{s^2 + 2\zeta\omega_n s + \omega_n^2} = \frac{\omega_n^2(M_{ms2}s^2 + R_{ms2}s + K_{ms2} + K_a)}{K_a(s^2 + 2\zeta\omega_n s + \omega_n^2)} \quad \cdots \quad \text{Equation (1)}$$

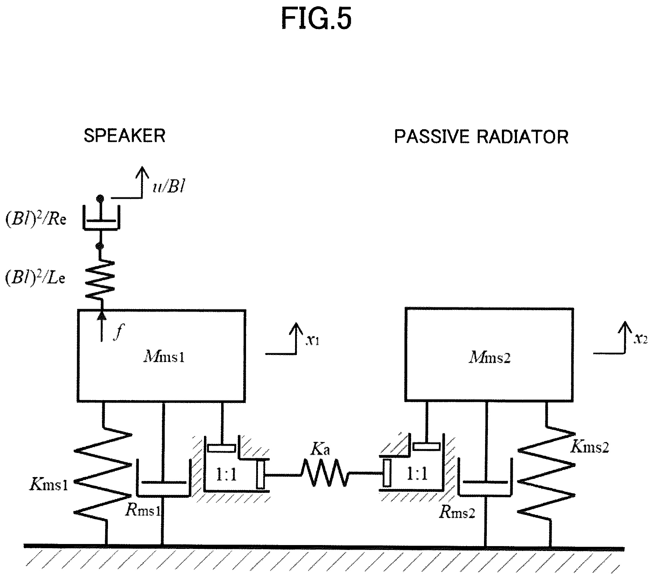

Equation 1 represents the transfer function F which converts the displacement x2 to the displacement x1 and damps the high-frequency component by a low-pass filter (LPF), where s is the Laplace operator, $\omega_n$ is the cutoff angular frequency of the LPF, and $\zeta$ is the damping ratio of the LPF. Ka, $M_{ms2}$, $R_{ms2}$, and $K_{ms2}$ are variables according to the displacement transfer model illustrated in FIG. 5, where Ka is the spring constant of air in the enclosure 8, Mms2 is the moving mass (the vibration system mass) of the passive radiator 3, Rms2 is the damping coefficient of the passive radiator 3, and Kms2 is the spring constant of the passive radiator 3.

In the model of FIG. 5, Mms1 is the moving mass (the vibration system mass) of the speaker 2, Rms1 is the damping coefficient of the speaker 2, Kms1 is the spring constant of the speaker 2, B is a magnetic force passing through the voice coil of the speaker 2, 1 is the voice coil length, Re is the resistance component of the voice coil of the speaker 2, Le is the inductance of the voice coil of the speaker 2, and u is the input voltage.

The embodiments of the present disclosure have been described above. According to the embodiments, displacement of the vibration system of the speaker 2 can be detected while the sensor 4 is arranged apart from the voice coil of the speaker 2, at a position not affected by the magnetic field generated by a current flowing through the voice coil. Herein, in the embodiments described above, the passive radiator 3 may be replaced with a vibration body which vibrates by the air vibration caused by the vibration of the vibration system of the speaker 2. In this case, the displacement-detecting magnet 308 is fixed to the vibration body, and the sensor 4 and the magnetic circuit 320 are provided on a fixed body fixed to the fixed system of the speaker 2.

Therefore, according to the present disclosure, it is possible to eliminate the effect of the magnetic field caused by the current flowing through the voice coil of the speaker from the detection of the displacement of the vibration system of the speaker using the magnetic flux generated by the magnet.

Although the embodiments of the present disclosure have been described above, it is to be understood that the present disclosure is not limited thereto. Various modifications may be made without departing from the scope of the appended claims.

## Claims

1. A displacement-detecting device for a speaker, the displacement-detecting device comprising:

   a magnet fixed to a vibration body configured to vibrate by air vibration caused by vibration of a vibration system of the speaker;
   a sensor provided at a fixed body relative to a fixed system of the speaker;
   a displacement detector; and
   a displacement converter, wherein
   the sensor is configured to detect a magnetic flux vector of the magnet acting on the sensor,
   the displacement detector is configured to detect a displacement of a vibration system of a passive radiator based on a detection value of the magnetic flux vector by the sensor, and
   the displacement converter is configured to convert the displacement of the vibration system of the passive radiator to a displacement of the vibration system of the speaker in accordance with a relationship between the displacement of the vibration system of the passive radiator and the displacement of the vibration system of the speaker.

2. A displacement-detecting device for a speaker, the displacement-detecting device comprising:

   a displacement-detecting magnet fixed to a vibration system of a passive radiator, the passive radiator having a fixed system fixed to an enclosure, and the vibration system being vibrated by an air vibration of the speaker having a fixed system, fixed to the enclosure;
   a sensor fixed to the fixed system of the passive radiator;
   a displacement detector; and
   a displacement converter, wherein
   the sensor is configured to detect a magnetic flux vector of the displacement-detecting magnet acting on the sensor,
   the displacement detector is configured to detect a displacement of the vibration system of the passive radiator based on a detection value of the magnetic flux vector of the sensor, and

the displacement converter is configured to convert the displacement of the vibration system of the passive radiator detected by the displacement detector to a displacement of the vibration system of the speaker, in accordance with a relationship between the displacement of the vibration system of the passive radiator and the displacement of the vibration system of the speaker.

3. The displacement-detecting device for the speaker according to claim 2, the displacement-detecting device further comprising:

a fixed-system magnet fixed to the fixed system of the passive radiator, wherein

the sensor is configured to detect an angle of a resultant magnetic flux vector of a magnetic flux vector of the displacement-detecting magnet and a magnetic flux vector of the fixed-system magnet, the resultant magnetic flux vector acting on the sensor, and

the displacement detector is configured to detect the displacement of the vibration system of the passive radiator based on the angle of the resultant magnetic flux vector.

4. The displacement-detecting device for the speaker according to claim 2 or 3, wherein

the displacement converter is a filter having a transfer function that converts the displacement of the vibration system of the passive radiator to the displacement of the vibration system of the speaker.

5. An audio system comprising:

the displacement-detecting device for the speaker according to one of the preceding claims;

a sound source device configured to output an audio signal; and

a signal processing device configured to perform signal processing on the audio signal output from the sound source device in accordance with the displacement of the vibration system of the speaker and output the processed audio signal to the speaker, the displacement of the vibration system of the speaker being obtained by conversion with the displacement converter.

# FIG.1

EP 4 776 652 A1

FIG.2

# FIG.3A

# FIG.3B

## FIG.4A

## FIG.4B

## FIG.4C

## FIG.4D

# FIG.5

SPEAKER                    PASSIVE RADIATOR

EP 4 776 652 A1

Europäisches
Patentamt

European
Patent Office

Office européen
des brevets

**EUROPEAN SEARCH REPORT**

**Application Number**

EP 25 22 1633

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/276153 A1 (FRENCH JOHN B [CA]) 15 August 2024 (2024-08-15) * paragraphs [0202] - [0262]; figures 7-9 * ----- | 1-5 | INV. H04R3/00 H04R9/02 H04R29/00 |
| A | US 10 667 040 B1 (FRENCH JOHN BARRY [CA]) 26 May 2020 (2020-05-26) * figure 23 * ----- | 1-5 | ADD. H04R1/28 H04R9/06 |

|  |
|---|
| TECHNICAL FIELDS SEARCHED (IPC) |
| H04R |

The present search report has been drawn up for all claims

| Place of search | Date of completion of the search | Examiner |
|---|---|---|
| The Hague | 28 April 2026 | Radomirescu, B-M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 1633

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2026

| Patent document cited in search report | | Publication date | Patent family member(s) | | Publication date |
|---|---|---|---|---|---|
| US 2024276153 | A1 | 15-08-2024 | CA | 3210797 A1 | 09-09-2022 |
| | | | CN | 117083880 A | 17-11-2023 |
| | | | US | 11405729 B1 | 02-08-2022 |
| | | | US | 2023023373 A1 | 26-01-2023 |
| | | | US | 2024276153 A1 | 15-08-2024 |
| | | | WO | 2022183276 A1 | 09-09-2022 |
| US 10667040 | B1 | 26-05-2020 | CN | 111885476 A | 03-11-2020 |
| | | | EP | 3734994 A1 | 04-11-2020 |
| | | | JP | 7676115 B2 | 14-05-2025 |
| | | | JP | 2020184756 A | 12-11-2020 |
| | | | KR | 20200127875 A | 11-11-2020 |
| | | | US | 10667040 B1 | 26-05-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022149259 A